# EUROPEAN PATENT APPLICATION

(11) **EP 4 752 984 A1**
(43) Date of publication of application: **03.06.2026**
(21) Application number: 25206289.8
(22) Date of filing: 02.10.2025
(51) Int. Cl.: H01M 4/62

(54) **POSITIVE ELECTRODE, RECHARGEABLE LITHIUM BATTERY INCLUDING THE SAME, AND METHOD OF MANUFACTURING THE SAME**

(30) Priority: 08.10.2024 KR 20240136837
(71) Applicant: SAMSUNG SDI CO., LTD., Yongin-si, Gyeonggi-do 17084 (KR)
(72) Inventor: Cha, Minah, 17084 Yongin-si (KR); Hwang, Hoseong, 17084 Yongin-si (KR); Lee, Jongjin, 17084 Yongin-si (KR); Kim, JinYoung, 17084 Yongin-si (KR)
(74) Representative: Marks & Clerk LLP

(57) **Abstract**

A positive electrode includes a current collector and a positive electrode active material layer on the current collector, the positive electrode active material layer comprising (a) a first positive electrode active material that comprises lithium-nickel-based composite oxide and has a bare form without a carbon coating on a surface thereof (is substantially devoid of a carbon coating on a surface thereof) , (b) a second positive electrode active material that comprises lithium-nickel-based composite oxide and has a core and a carbon coating layer on the core, (c) a conductive material that comprises a carbon-based material, and (d) a binder. Also disclosed is a rechargeable lithium battery including the positive electrode, and a method of manufacturing the positive electrode.

## Description

### BACKGROUND

### 1. Field

The present invention relates to a positive electrode, a rechargeable lithium battery including the same, and a method of manufacturing the same.

### 2. Description of the Related Art

Recently, with the rapid spread and popularization of battery-utilizing electronic devices (such as mobile phones and/or laptop computers) and/or electric vehicles, there is a rapidly increasing demand for rechargeable batteries with high energy density and high capacity. Therefore, intensive research has been conducted to improve performance of such rechargeable batteries, such as rechargeable lithium batteries.

A rechargeable lithium battery includes a positive electrode, a negative electrode, and an electrolyte. Each of the positive electrode and the negative electrodes includes an active material that is capable of intercalation and deintercalation of lithium ions. Electrical energy is generated by oxidation and reduction reactions when lithium ions are intercalated and deintercalated. For example, the electrical energy is generated when lithium ions are intercalated into the positive electrode and/or deintercalated from the negative electrode during the discharge process.

### SUMMARY

One or more aspects of the present invention are directed toward a positive electrode capable of preventing or reducing a positive electrode active material from being fractured when an electrode plate is pressed and a method of manufacturing the same.

One or more aspects of the present invention are directed toward a rechargeable lithium battery with an excellent or suitable high-temperature lifetime.

Additional aspects will be set forth in part in the description which follows and, in part, will be apparent from the description, or may be learned by practice of the presented embodiments of the disclosure.

According to a first aspect of the present invention there is provided a positive electrode including: a current collector; and a positive electrode active material layer on the current collector. The positive electrode active material layer includes: a first positive electrode active material (e.g., in a form of particles) that includes a lithium-nickel-based composite oxide, wherein the first positive electrode active material has a bare form without a carbon coating on a surface thereof; a second positive electrode active material (e.g., in a form of particles) that includes a lithium-nickel-based composite oxide, wherein the second positive electrode active material include a core and a carbon coating layer on the core; a conductive material that includes a carbon-based material; and a binder.

According to a second aspect of the present invention there is provided a rechargeable lithium battery including the aforementioned positive electrode discussed above.

According to a third aspect of the present invention there is provided a method of manufacturing a positive electrode including the steps of: preparing a first positive electrode active material (e.g., in a form of particles) that includes a lithium-nickel-based composite oxide; performing a dry coating of a lithium-nickel-based composite oxide with graphene to form a second positive electrode active material (e.g., in a form of particles); forming a slurry that includes the first positive electrode active material, the second positive electrode active material, a conductive material, a binder, and a solvent; and coating, drying, and pressing the slurry on a current collector.

At least some of the above and other features of the invention are set out in the claims.

### BRIEF DESCRIPTION OF DRAWINGS

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.
FIG. 1 illustrates a simplified conceptual diagram showing a rechargeable lithium battery according to one or more embodiments of the present disclosure.
FIGS. 2 - 5 each illustrate a simplified diagram showing a rechargeable lithium battery according to one or more embodiments of the present disclosure.
FIG. 6 illustrates a cross-sectional view showing a positive electrode according to one or more embodiments of the present disclosure.
FIG. 7 illustrates an enlarged view of area 'M' of FIG. 6 showing a positive electrode according to one or more embodiments of the present disclosure.
FIG. 8 illustrates a simplified cross-sectional view showing a large particle of a first positive electrode active material according to one or more embodiments of the present disclosure.
FIG. 9 illustrates a simplified cross-sectional view showing a large particle of a second positive electrode active material according to one or more embodiments of the present disclosure.
FIG. 10 illustrates a simplified cross-sectional view showing a small particle of a second positive electrode active material according to one or more embodiments of the present disclosure.
FIG. 11 illustrates a flow chart showing a method of manufacturing a positive electrode according to one or more embodiments of the present disclosure.
FIGS. 12 and 13 illustrate simplified diagrams showing a method of manufacturing a positive electrode according to one or more embodiments of the present disclosure.
FIG. 14 illustrates a scanning electron microscope (SEM) image showing a positive electrode of Example 1 of the present disclosure.
FIG. 15 illustrates a scanning electron microscope (SEM) image showing a positive electrode of Comparative Example 1 of the present disclosure.
FIG. 16 illustrates a scanning electron microscope (SEM) image showing a positive electrode of Comparative Example 2 of the present disclosure.

### DETAILED DESCRIPTION

In order to sufficiently understand the configurations and effects of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to explain the present disclosure and let those skilled in the art fully know the scope of the present disclosure.

In this disclosure, it will be understood that, if (e.g., when) an element is referred to as being on another element, the element may be directly on the other element or one or more intervening elements may be present between therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the disclosure, and duplicative descriptions thereof may not be provided for conciseness.

One or more embodiments detailed in this disclosure will be discussed with reference to sectional and/or plan views as ideal example views of the present disclosure. In the drawings, thicknesses of layers and regions may be exaggerated for effectively explaining the technical contents. Accordingly, regions illustrated in the drawings have general properties, and shapes of regions illustrated in the drawings are used to illustratively disclose specific shapes but not to limit the scope of the present disclosure. It will be understood that, although the terms "first", "second", "third", and/or the like may be used herein to describe one or more suitable elements, these elements should not be limited by these terms. These terms are only used to distinguish one element from another element. Thus, a first element discussed herein could be termed a second element, without departing from the scope of the disclosure. The one or more embodiments explained and illustrated herein include complementary embodiments thereof.

The terms in this disclosure are merely used to describe one or more embodiments, but are not intended to limit the present disclosure. Unless otherwise specially noted in this disclosure, the expression of singular form may include the expression of plural form. For example, the singular forms "a," "an," and "the" are intended to include the plural forms as well, unless the context clearly indicates otherwise. The terms "comprises/includes" and/or "comprising/including" and/or "has(have)/having" used in this description do not exclude the presence or addition of one or more other components. Additionally, the terms "comprise(s)/comprising," "include(s)/including," "has(have)/having", or other similar terms include or support the terms "consisting of" and "consisting essentially of," indicating the presence of stated features, numbers, steps, operations, elements, parts, and/or components, without or essentially without the presence of other features, numbers, steps, operations, elements, parts, components, and/or groups thereof. Further, the utilization of "may" when describing embodiments of the present disclosure refers to "one or more embodiments of the present disclosure".

In this description, the term "combination thereof" may refer to a mixture, a stack, a composite, a copolymer, an alloy, a blend, or a reaction product of constituents.

Unless otherwise especially defined in this disclosure, the term "particle diameter" or "particle size" refers to an average particle diameter/size. In addition, a particle diameter/size indicates an average particle diameter/size (D₅₀) where a cumulative volume is about 50 volume % in a particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter/size (D₅₀) may be measured by a method widely suitable to those skilled in the art, for example, by a particle size analyzer, for example, HORIBA, LA-950 laser particle size analyzer, or by using a transmission electron microscope (TEM) image, or a scanning electron microscope (SEM) image. In one or more embodiments, a dynamic light-scattering (DLS) measurement device is used to perform a data analysis, the number of particles is counted for each particle size range, and then from this, an average particle diameter/size (D₅₀) value may be obtained through a calculation. In one or more embodiments, a laser scattering method may be utilized to measure the average particle diameter/size (D₅₀). In the laser scattering method, target particles are dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter/size (D₅₀) is calculated in the 50% standard of particle diameter distribution in the measurement device. In the present disclosure, when particles are spherical, "diameter/size" indicates an average particle diameter/size, and when the particles are non-spherical, the "diameter/size" indicates an average major axis length of particles.

In this disclosure, the term "single particle" may refer to one single particle that is present alone without a grain boundary therein. The single particle may refer to one particle, a monolithic structure, a single unitary structure, or a non-aggregated (e.g., non-agglomerated) particle in which particles are not aggregated (e.g., agglomerated) together with one another but present as an independent phase in terms of morphology, and thus may be expressed as a single crystal particle. In one or more embodiments, the single particle may be a particle containing several crystals. The single particle may be provided as a single isolated form, or may be present in which less than 10 single particles are adhered to or loosely attached to each other.

In this disclosure, each of phrases as "A or B," "A and/or B," "A/B," "at least one of A and B," "at least one of A or B," "A, B, or C," "at least one of A, B, and C," and "at least one of A, B, or C," may include any one of, or all possible combinations of, the items enumerated together in a corresponding one of the phrases.

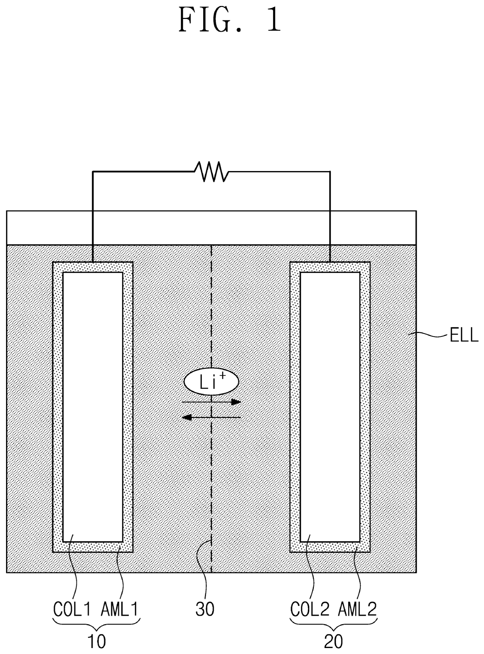

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. For example, the positive electrode 10, the negative electrode 20, and the separator 30 may be impregnated in the electrolyte ELL.

The electrolyte ELL may be a medium through which lithium ions are transferred between the positive electrode 10 and the negative electrode 20. In the electrolyte ELL, the lithium ions may move through the separator 30 toward the positive electrode 10 or the negative electrode 20.

### Positive Electrode

The positive electrode 10 for the rechargeable lithium battery includes a current collector COL1 and a positive electrode active material layer AML1 on (e.g., formed on) the current collector COL1. The positive electrode active material layer AML1 includes a positive electrode active material (e.g., in a form of particles), a binder and a conductive material (e.g., an electron conductor).

In one or more embodiments, the positive electrode 10 may further include an additive that may serve as a sacrificial positive electrode.

An amount of the positive electrode active material in the positive electrode active material layer AML1 may be in a range of about 90 wt% to about 99wt% relative to (e.g., based on) a total weight of 100 wt% of the positive electrode active material layer AML1. Amounts of the binder and the conductive material may each be about 0.5 wt% to about 5 wt% relative to (e.g., based on) the total weight of 100 wt% of the positive electrode active material layer AML1.

The binder serves to improve attachment of positive electrode active material particles to each other and also to improve attachment of the positive electrode active material to the current collector COL1. The binder may include, for example, one or more selected from among polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material (e.g., an electrically or electron conductive material or conductor) may be used to provide the electrode with conductivity, and any suitable conductive material that does not cause a chemical change in a battery may be used as the conductive material. For example, the conductive material may include a carbon-based material such as natural graphite, artificial graphite, carbon black, acetylene black, Ketjen black, carbon fiber, carbon nano-fiber, and/or carbon nano-tube; a metal-based material in the form of a metal powder or a metal fiber including one or more selected from among copper, nickel, aluminium, and silver; a conductive polymer such as a polyphenylene derivative; and/or a (e.g., any suitable) mixture thereof.

In one or more embodiments, aluminium (Al) may be used as the current collector COL1, but embodiments of the present disclosure are not limited thereto.

### Positive Electrode Active Material

The positive electrode active material in the positive electrode active material layer AML1 includes a compound (e.g., lithiated intercalation compound) that is capable of reversibly intercalating and deintercalating lithium. For example, in one or more embodiments, the positive electrode active material may include at least one kind of composite oxide including lithium and a metal that is selected from among cobalt, manganese, nickel, and/or a (e.g., any suitable) combination thereof.

The composite oxide includes lithium transition metal composite oxides, for example, lithium-nickel-based oxides, lithium-cobalt-based oxides, lithium-manganese-based oxides, lithium-iron-phosphate-based compounds, cobalt-free nickel-manganese-based oxide, and/or a (e.g., any suitable) combination thereof.

For example, in one or more embodiments, the positive electrode active material may include a compound expressed by one selected from among chemical formulae: LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}O_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); and LiₐFePO₄ (where 0.90≤a≤1.8).

In the foregoing chemical formulae, A may be nickel (Ni), cobalt (Co), manganese (Mn), or a (e.g., any suitable) combination thereof, X may be Al, Ni, Co, Mn, chromium (Cr), iron (Fe), magnesium (Mg), strontium (Sr), vanadium (V), a rare-earth element, or a (e.g., any suitable) combination thereof, D may be oxygen (O), fluorine (F), sulfur (S), phosphorus (P), or a (e.g., any suitable)combination thereof, G may be Al, Cr, Mn, Fe, Mg, lanthanum (La), cerium (Ce), Sr, V, or a (e.g., any suitable) combination thereof, and L¹ may be Mn, Al, or a (e.g., any suitable) combination thereof.

For example, in one or more embodiments, the positive electrode active material may be a high-nickel-based positive electrode active material having a nickel amount of equal to or greater than about 80 mol%, about 85 mol%, about 90 mol%, about 91 mol%, or about 94 mol% and equal to or less than about 99 mol% relative to (i.e., based on) 100 mol% of a total metal excluding lithium in the lithium transition metal composite oxide. The high-nickel-based positive electrode active material may achieve high capacity and thus may be applied to a high-capacity and high-density rechargeable lithium battery.

### Negative Electrode

The negative electrode 20 for the rechargeable lithium battery may include a current collector COL2 and a negative electrode active material layer AML2 positioned on the current collector COL2. The negative electrode active material layer AML2 may include a negative electrode active material (e.g., in a form of particles) and may further include a binder and/or a conductive material (e.g., electron conductor).

For example, in one or more embodiments, the negative electrode active material layer AML2 may include a negative electrode active material of about 90 wt% to about 99.5 wt%, a binder of about 0.5 wt% to about 5 wt%, and a conductive material of about 0 wt% to about 5 wt%, based on a total weight of 100 wt% of the negative electrode active material layer.

The binder may serve to improve attachment of negative electrode active material particles to each other and also to improve attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluoro elastomer, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenolic resin, an epoxy resin, polyvinyl alcohol, and/or a (e.g., any suitable) combination thereof.

When an aqueous binder is used as the binder of the negative electrode, a cellulose-based compound capable of providing viscosity may further be included. The cellulose-based compound may include one or more selected from among carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electrically or electron conductive material or conductor) may be used to provide an electrode with conductivity, and any suitable conductive material that does not cause a chemical change in a battery may be used as the conductive material. For example, in one or more embodiments, the conductive material may include a carbon-based material such as natural graphite, artificial graphite, carbon black, acetylene black, Ketjen black, carbon fiber, carbon nano-fiber, and/or carbon nano-tube; a metal-based material in the form of a metal powder or a metal fiber including one or more selected from among copper, nickel, aluminium, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

### Negative Electrode Active Material

The negative electrode active material in the negative electrode active material layer AML2 may include a material that is capable of reversibly intercalating and deintercalating lithium ions, lithium metal, a lithium metal alloy, a material that is capable of doping and de-doping lithium, or a transition metal oxide.

The material that is capable of reversibly intercalating and deintercalating lithium ions may include a carbon-based negative electrode active material, for example, crystalline carbon, amorphous carbon, and/or a (e.g., any suitable) combination thereof. For example, the crystalline carbon may include graphite such as non-shaped (e.g., irregularly shaped), sheet-shaped, flake-shaped, sphere-shaped, or fiber-shaped natural graphite or artificial graphite, and the amorphous carbon may include soft carbon, hard carbon, mesophase pitch carbon, and/or calcined coke.

The lithium metal alloy may include an alloy of lithium and a metal that is selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material that is capable of doping and de-doping lithium may include a Si-based negative electrode active material or a Sn-based negative electrode active material. The Si-based negative electrode active material may include silicon, a silicon-carbon composite, SiOₓ (where 0<x≤2), a Si-Q alloy (where Q is an alkali metal, an alkaline earth metal, a Group 13 element, a Group 14 element (except for Si), a Group 15 element, a Group 16 element, a transition metal, a rare-earth element, or a (e.g., any suitable) combination thereof), and/or a (e.g., any suitable) combination thereof. The Sn-based negative electrode active material may include Sn, SnOₖ (0<k≤2) (e.g., SnO₂), a Sn-based alloy, or a (e.g., any suitable) combination thereof.

The silicon-carbon composite may be a composite of silicon and amorphous carbon (e.g., in a form of particles). According to one or more embodiments, the silicon-carbon composite may have a structure in which the amorphous carbon is coated on a surface of the silicon particles. For example, in one or more embodiments, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

In one or more embodiments, the silicon-carbon composite may further include crystalline carbon. For example, the silicon-carbon composite may include a core including crystalline carbon and silicon particles and may also include an amorphous carbon coating layer on (e.g., positioned on) a surface of the core.

In one or more embodiments, the Si-based negative electrode active material and/or the Sn-based negative electrode active material may be used in combination with a carbon-based negative electrode active material.

### Separator

Based on a type (kind) of the rechargeable lithium battery, the separator 30 may be present between the positive electrode 10 and the negative electrode 20. The separator 30 may include one or more selected from among polyethylene, polypropylene, and polyvinylidene fluoride, or may have a multi-layered separator thereof such as a polyethylene/polypropylene bi-layered separator, a polyethylene/polypropylene/polyethylene tri-layered separator, or a polypropylene/polyethylene/polypropylene tri-layered separator.

The separator 30 may include a porous substrate and a coating layer on (e.g., positioned on) a surface (e.g., one surface or two opposite surfaces) of the porous substrate, and the coating layer includes an organic material, an inorganic material, and/or a (e.g., any suitable) combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymers, polyphenylenesulphide, polyethylene naphthalate, glass fibers, and polytetrafluoroethylene (e.g., Teflon^{™}), or may be a copolymer or a mixture including two or more thereof.

The organic material may include a polyvinylidenefluoride-based copolymer or a (meth)acrylic copolymer.

The inorganic material may include an inorganic particle selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, and/or a (e.g., any suitable) combination thereof, but embodiments of the present disclosure are not limited thereto.

In one or more embodiments, the organic material and the inorganic material may be present mixed in one coating layer or may be present as a stack of a coating layer including the organic material and a coating layer including an inorganic material.

### Electrolyte

The electrolyte ELL for the rechargeable lithium battery may include a non-aqueous organic solvent and a lithium salt.

The non-aqueous organic solvent may serve as a medium for transmitting ions that participate in an electrochemical reaction of the rechargeable lithium battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol, and the aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane and/or 1.4-dioxolane; and/or sulfolanes.

The non-aqueous organic solvent may be used alone or in a mixture of two or more thereof.

In addition, if (e.g., when) a carbonate-based solvent is used, a cyclic carbonate and a linear carbonate may be mixed and used, and the cyclic carbonate and the linear carbonate may be mixed in a volume ratio of about 1:1 to about 1:9.

The lithium salt may be a material that is dissolved in the non-aqueous organic solvent to serve as a supply source of lithium ions in a rechargeable lithium battery and plays a role in enabling a basic operation of the rechargeable lithium battery and in promoting the movement of lithium ions between the positive electrode and the negative electrode. The lithium salt may include, for example, at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

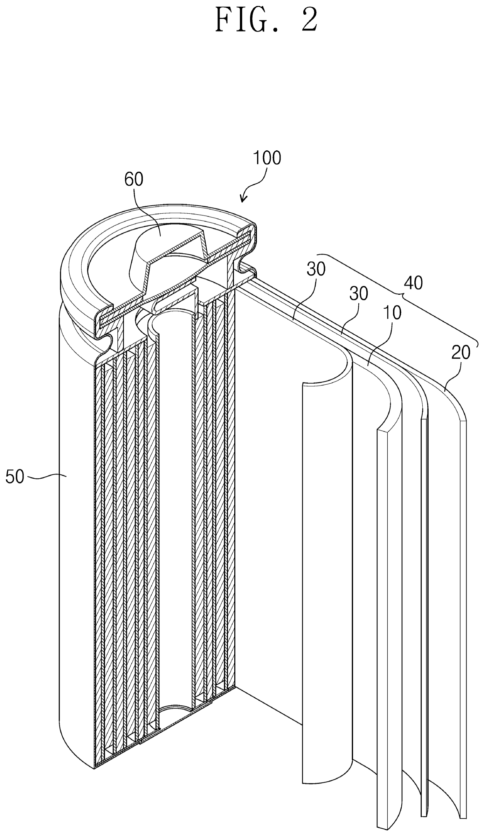

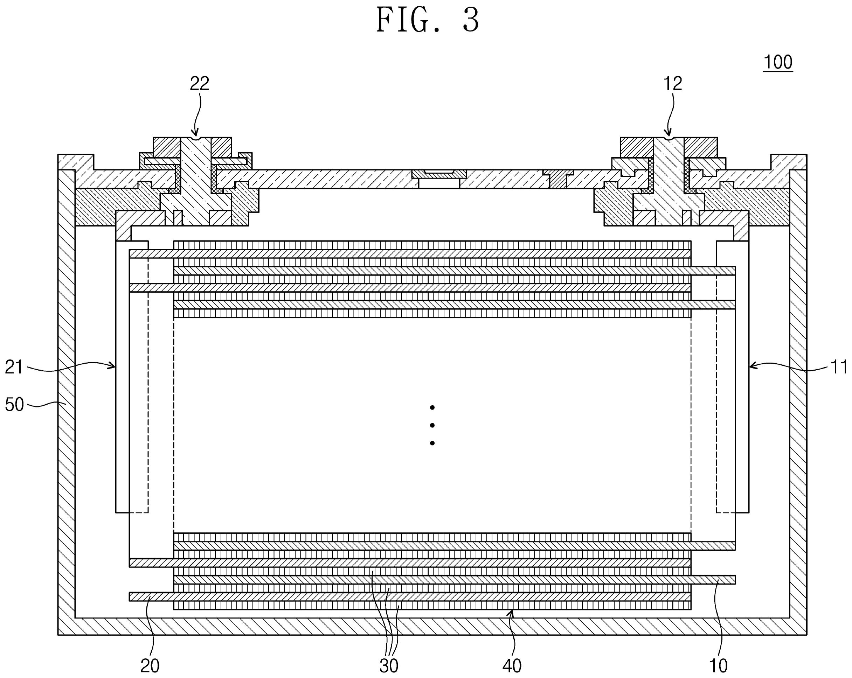

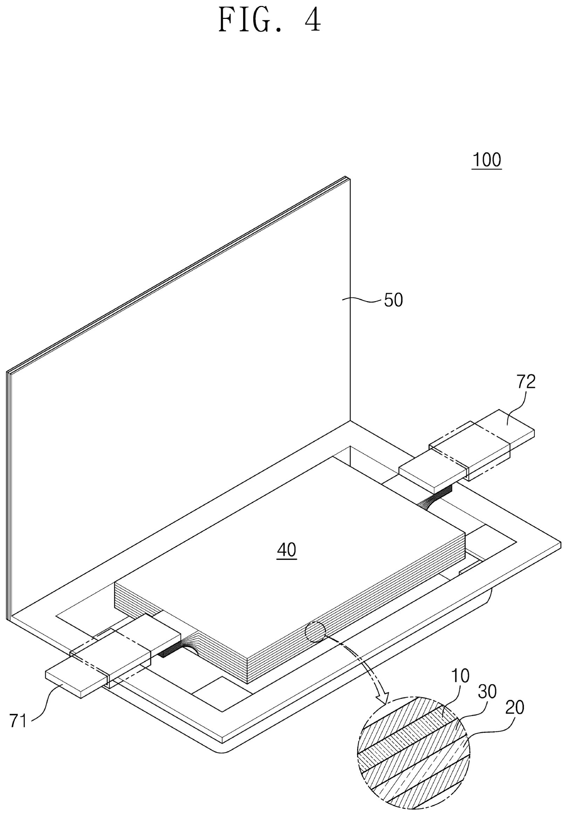

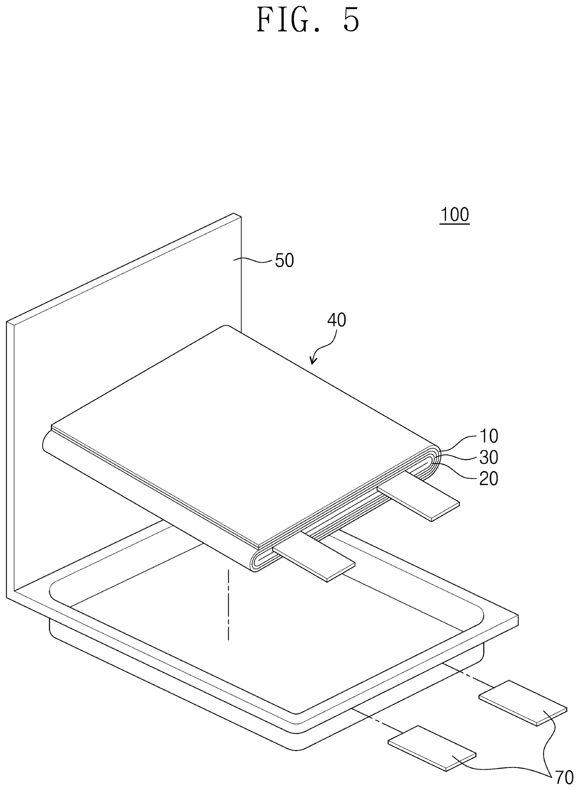

Based on a shape (e.g., external form) of a rechargeable lithium battery, the rechargeable lithium battery may be classified into a cylindrical, a prismatic, a pouch, or a coin type (kind) battery. FIGS. 2 to 5 each illustrate a simplified diagram showing a rechargeable lithium battery according to one or more embodiments of the present disclosure, with FIG. 2 showing a cylindrical battery, FIG. 3 showing a prismatic battery, and FIGS. 4 and 5 each showing a pouch-type (kind) battery. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. In one or more embodiments, the rechargeable lithium battery 100 may include a sealing member 60 that seals the casing 50 as illustrated in FIG. 2. In one or more embodiments, as illustrated in FIG. 3, the rechargeable lithium battery 100 may include a positive electrode lead tab 11, a positive electrode terminal 12, a negative electrode lead tab 21, and a negative electrode terminal 22. In one or more embodiments, as shown in FIGS. 4 and 5, the rechargeable lithium battery 100 may include an electrode tab 70, or a positive electrode tab 71 and a negative electrode tab 72, serving as an electrical path for externally inducing a current generated in the electrode assembly 40. For example, the rechargeable lithium battery 100 may include an electrode tab 70, or separate positive and negative electrode tabs (71 and 72), which serve as electrical paths for externally inducing a current generated in the electrode assembly 40.

The rechargeable lithium battery according to one or more embodiments of the present disclosure may be applied to automotive vehicles, mobile phones, and/or any other electrical devices, but embodiments of the present disclosure are not limited thereto.

The following will describe in more detail the positive electrode 10 of the present disclosure.

### Positive Electrode

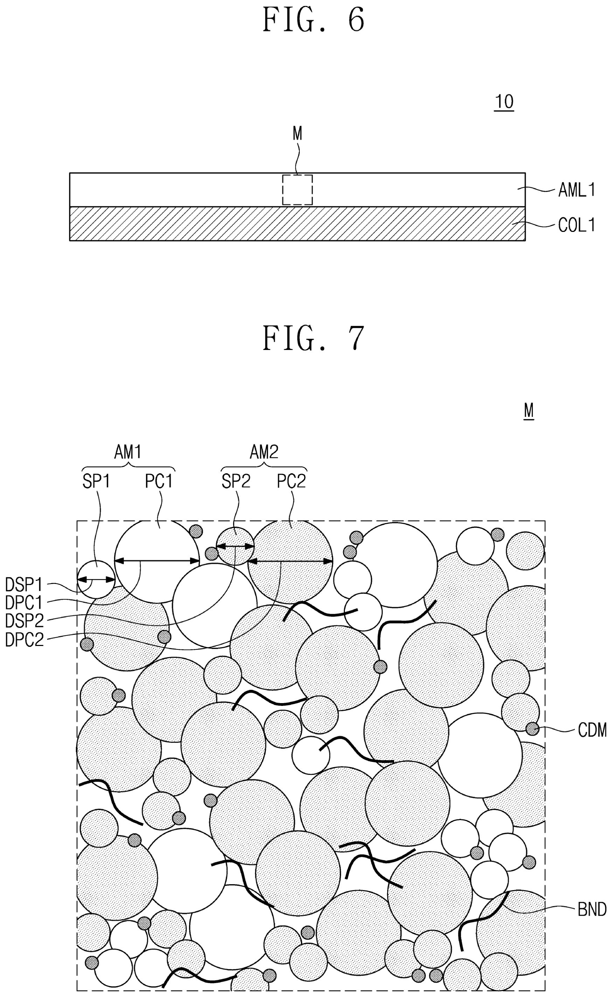

FIG. 6 illustrates a cross-sectional view showing the positive electrode 10 according to one or more embodiments of the present disclosure. FIG. 7 illustrates an enlarged view showing section M of FIG. 6 according to one or more embodiments. In the following descriptions, the same features as those discussed with reference to FIGS. 1 to 5 will not be provided for convenience of description, and a difference thereof will be discussed in more detail.

Referring to FIG. 6 and FIG. 7, the positive electrode 10 according to one or more embodiments of the present disclosure includes a current collector COL1 and a positive electrode active material layer AML1 on (e.g., formed on) the current collector COL1. The positive electrode active material layer AML1 includes a first positive electrode active material AM1 and a second positive electrode active material AM2, and further includes a binder BND and a conductive material CDM. Each of first positive electrode active material AM1 and a second positive electrode active material AM2 may be in a form of particles. A description of the binder BND may be the same as that discussed above.

A total amount of the first and second positive electrode active materials AM1 and AM2 in the positive electrode active material layer AML1 may be in a range of about 90 wt% to about 99.5 wt% relative to (e.g., based on) a total weight of 100 wt% of the positive electrode active material layer AML1. For example, in one or more embodiments, the total amount of the first and second positive electrode active materials AM1 and AM2 in the positive electrode active material layer AML1 may be equal to or greater than about 90 wt%, about 95 wt%, about 96 wt%, or about 97 wt%, based on the total weight of 100 wt% of the positive electrode active material layer AML1. For example, in one or more embodiments, the total amount of the first and second positive electrode active materials AM1 and AM2 in the positive electrode active material layer AML1 may be equal to or greater than about 90 wt% and equal to or less than about 99.5 wt%, about 99 wt%, or about 98.5 wt%, based on the total weight of 100 wt% of the positive electrode active material layer AML1. For example, the total amount of the first positive electrode active material and the second positive electrode active material may be in a range of about 97 wt% to about 99.5 wt% based on the total weight of 100 wt% of the positive electrode active material layer.

The conductive material CDM may include, for example, a carbon-based material. For example, the carbon-based material may include at least one selected from among natural graphite, artificial graphite, carbon black, acetylene black, Ketjen black, carbon fiber, carbon nano-fiber, and carbon nano-tube. The conductive material CDM may improve adhesiveness between positive electrode active materials.

An amount of the conductive material CDM may be about 0.5 wt% to about 2 wt% relative to (e.g., based on) the total weight of 100 wt% of the positive electrode active material layer AML1. For example, in one or more embodiments, the amount of the conductive material CDM may be about 0.5 wt% to about 1.5 wt% or about 0.5 wt% to about 1 wt% relative to the total weight of 100 wt% of the positive electrode active material layer AML1.

A ratio of a weight of the conductive material to a total weight of the first and second positive electrode active materials AM1 and AM2 may be in a range of about 1:99.5 to about 1:97. For example, in one or more embodiments, the ratio of a weight of the conductive material to a total weight of the first and second positive electrode active materials AM1 and AM2 may be equal to or greater than about 1:99.5, about 1:99, about 1:98.5, or about 1:98 and equal to or less than about 1:97. For example, in one or more embodiments, the ratio of a weight of the conductive material to a total weight of the first and second positive electrode active materials AM1 and AM2 may be equal to or greater than 1:99.5 and equal to or less than about 1:97 or about 1:97.5.

As the positive electrode 10 includes the first and second positive electrode active materials AM1 and AM2, it may decrease an amount of the conductive material CDM in an electrode plate and secure an additional space in an electrode plate having a same mixture density. Therefore, it may prevent or reduce the positive electrode active materials AM1 and AM2 from being fractured when an electrode plate is pressed and provide a rechargeable lithium battery having an excellent or suitable high-temperature lifetime.

The following will describe in more detail the first and second positive electrode active materials AM1 and AM2.

### First Positive Electrode Active Material

Referring to FIG. 7, the first positive electrode active material AM1 may include at least one selected from among a large particle PC1 and a small particle SP1. For example, in one or more embodiments, the first positive electrode active material AM1 may include the large particle PC1. In one or more embodiments, the first positive electrode active material AM1 may include the small particle SP1. In one or more embodiments, the first positive electrode active material AM1 may include the large particle PC1 and the small particle SP1.

An average particle diameter D50_{PC1} of the large particle PC1 may be greater than an average particle diameter D50_{SP1} of the small particle SP1. For example, in one or more embodiments, the average particle diameter D50_{PC1} of the large particle PC1 may be in a range of about 6.0 micrometers (µm) to about 20.0 µm, about 10.0 µm to about 20.0 µm, or about 10.0 µm to about 15.0 µm. For example, in one or more embodiments, the average particle diameter D50_{SP1} of the small particle SP1 may be in a range of about 1.0 µm to about 5.0 µm, about 2.0 µm to about 5.0 µm, or about 3.0 µm to about 5.0 µm. For example, an average particle diameter D50 may be obtained by randomly selecting 30 or more of each of the large particle PC1 and the small particle SP1 from an electron microscope image of the first positive electrode active material AM1 to measure a particle diameter, and taking a particle diameter of particles having an accumulative volume of 50 vol% in the particle size distribution as the average particle diameter. For another example, an average particle diameter D50 may be obtained by using a particle size analyzer to measure particle diameters, and taking a particle diameter of particles having an accumulative volume of 50 vol% in the particle size distribution as the average particle diameter.

Each of the large particle PC1 and the small particle SP1 may have a granular shape or a spherical shape.

The first positive electrode active material AM1 according to one or more embodiments of the present disclosure may have a bimodal form that includes the large particle PC1 and the small particle SP1 whose average particle diameters are different from each other. The small particle SP1 may fill an interstice between the large particles PC1 to improve an integration density of the positive electrode active material layer AML1. For example, the positive electrode active material layer AML1 according to one or more embodiments of the present disclosure may have relatively high capacity and energy density per unit volume.

In one or more embodiments, a weight ratio of the large particle PC1 to the small particle SP1 may be in a range of about 95:5 to about 50:50. For example, in one or more embodiments, the weight ratio of the large particle PC1 to the small particle SP1 may be in a range of about 90:10 to about 60:40, about 90:10 to about 70:30, or about 80:20 to about 70:30. In one or more embodiments, the weight ratio of the large particle PC1 to the small particle SP1 may be in a range about 5:95 to about 50:50. For example, in one or more embodiments, in the first positive electrode active material AM1, a weight of the large particle PC1 may be greater than that of the small particle SP1.

In one or more embodiments, the first positive electrode active material AM1 may include only the large particle PC1. For example, the small particle SP1 may not be provided.

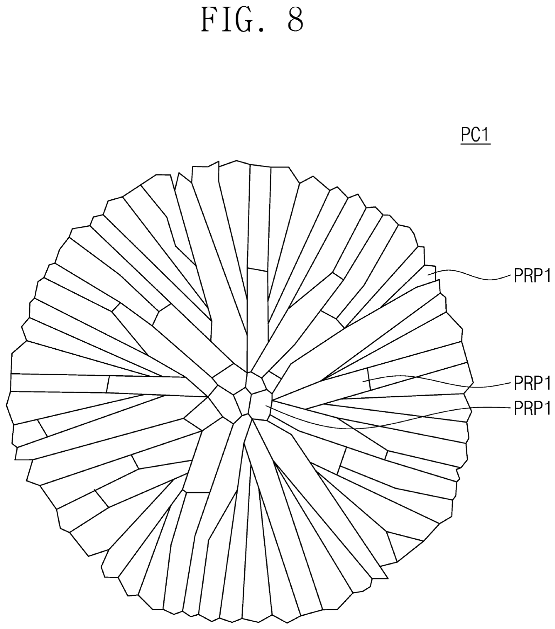

FIG. 8 illustrates a simplified cross-sectional view showing the large particle PC1 according to one or more embodiments of the present disclosure. Referring to FIG. 8, the large particle PC1 according to one or more embodiments of the present disclosure may be in a polycrystalline form, and may include a secondary particle in which at least two primary particles PRP1 are aggregated (e.g., agglomerated). The large particle PC1 may have a spherical shape or an oval shape.

The small particle SP1 according to one or more embodiments of the present disclosure may be in the form of a single particle. Here, the single particle may refer to that one single particle is present alone without a grain boundary therein. The single particle may refer to one particle, a monolithic structure, a single unitary structure, or a non-aggregated (e.g., non-agglomerated) particle in which particles are not aggregated (e.g., agglomerated) together with one another but present as an independent phase in terms of morphology, and may be expressed as a single crystal particle. As the first positive electrode active material AM1 may include the small particle SP1, it may achieve high capacity, high energy density, and improved lifetime characteristics.

The first positive electrode active material AM1 includes a lithium-nickel-based composite oxide. The large particle PC1 and the small particle SP1 may each independently include the lithium-nickel-based composite oxide. The lithium-nickel-based composite oxide includes lithium (Li), nickel (Ni), and may include a further transition metal. There may be no limitation on an amount of nickel (Ni) included in the lithium-nickel-based composite oxide.

The lithium-nickel-based composite oxide may contain a high amount of nickel (Ni). For example, in one or more embodiments, the lithium-nickel-based composite oxide may have a nickel amount of equal to or greater than about 60 mol%, about 80 mol%, about 90 mol%, or about 91 mol% and equal to or less than 100 mol%, about 99.9 mol%, or about 99 mol% of metals excluding lithium in the lithium-nickel-based composite oxide. For example, in one or more embodiments, the lithium-nickel-based composite oxide may have a nickel amount of equal to or greater than about 60 mol%, about 80 mol%, about 90 mol%, or about 91 mol% and equal to or less than 100 mol%, about 99.9 mol%, or about 99 mol% relative to the total moles of transition metals in the lithium-nickel-based composite oxide. When the nickel amount falls within the ranges above, the first positive electrode active material AM1 may achieve high capacity and high performance.

For example, in one or more embodiments, the lithium-nickel-based composite oxide may be represented by Chemical Formula 1.

**Chemical Formula 1** Liₐ₁Niₓ₁M¹_{y1}M²_{z1}O_{2-b1}X_{b1}

In Chemical Formula 1, the subscripts a1, x1, y1, z1, and b1 may satisfy the relationship of 0.9≤a1≤1.8, 0.8≤x1≤1, 0≤y1≤0.2, 0≤z1≤0.2, 0.9≤x1+y1+z1≤1.1, and 0≤b1≤0.1; M¹ and M² may each independently be at least one element selected from among aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), strontium (Sr), titanium (Ti), vanadium (V), tungsten (W), yttrium (Y), and zirconium (Zr); and X may be at least one element selected from among F, P, and S.

For example, in one or more embodiments, in Chemical Formula 1, the subscripts x1, y1, and z1 may satisfy the relationship of 0.85≤x1≤1, 0≤y1≤0.15, and 0≤z1≤0.15, or 0.9≤x1≤1, 0≤y1≤0.1, and 0≤z1≤0.1.

In one or more embodiments, the subscripts x1, y1, and z1 may satisfy the relationship of x1+y1+z1=1.

For example, in one or more embodiments, the lithium-nickel-based composite oxide may be represented by Chemical Formula 2. A compound represented by Chemical Formula 2 may be a lithium-nickel-cobalt-based composite oxide.

**Chemical Formula 2** Liₐ₂Niₓ₂Co_{y2}M³_{z2}O_{2-b2}X_{b2}

In Chemical Formula 2, the subscripts a2, x2, y2, z2, and b2 may satisfy the relationship of 0.9≤a2≤1.8, 0.8≤x2<1, 0<y2≤0.2, 0≤z2≤0.2, 0.9≤x2+y2+z2≤1.1, and 0≤b2≤0.1; M³ may be at least one element selected from among Al, B, Ba, Ca, Ce, Cr, Fe, Mg, Mn, Mo, Nb, Si, Sr, Ti, V, W, Y and Zr; and X may be at least one element selected from among F, P, and S.

For example, in one or more embodiments, in Chemical Formula 2, the subscripts x2, y2, and z2 may satisfy the relationship of 0.85≤x2≤0.99, 0.01≤y2≤0.15, and 0.01≤z2≤0.15, or 0.9≤x2≤0.99, 0.01≤y2≤0.1, and 0.01≤z2≤0.1.

In one or more embodiments, the subscripts x2, y2, and z2 may satisfy the relationship of x2+y2+z2=1.

For example, in one or more embodiments, the lithium-nickel-based composite oxide may be represented by Chemical Formula 3. A compound represented by Chemical Formula 3 may be a lithium-nickel-cobalt-aluminium oxide or a lithium-nickel-cobalt-manganese oxide.

**Chemical Formula 3** Liₐ₃Niₓ₃Co_{y3}M⁴_{z3}M⁵_{w3}O_{2-b3}X_{b3}

In Chemical Formula 3, the subscripts a3, x3, y3, z3, w3, and b3 may satisfy the relationship of 0.9≤a3≤1.8, 0.8≤x3≤0.98, 0.01≤y3≤0.19, 0.01≤z3≤0.19, 0≤w3≤0.19, 0.9≤x3+y3+z3+w3≤1.1, and 0≤b3≤0.1; M⁴ may be at least one element selected from among Al and Mn; M⁵ may be at least one element selected from among B, Ba, Ca, Ce, Cr, Fe, Mg, Mo, Nb, Si, Sr, Ti, V, W, Y and Zr; and X may be at least one selected from among F, P, and S.

For example, in one or more embodiments, in Chemical Formula 3, the subscripts x3, y3, z3, and w3 may satisfy the relationship of 0.85≤x3≤0.98, 0.01≤y3≤0.14, 0.01≤z3≤0.14, and 0≤w3≤0.14, or 0.9≤x3≤0.98, 0.01≤y3≤0.09, 0.01≤z3≤0.09, and 0≤w3≤0.09.

In one or more embodiments, the subscripts x3, y3, z3, and w3 may satisfy the relationship of x3+y3+z3+w3=1.

In one or more embodiments, the first positive electrode active material AM1 may further include a transition metal coating part on (e.g., positioned on) a surface of each of the large particle PC1 and the small particle SP1. The transition metal coating part may be positioned on an entirety or at least a portion of the surface of each of the large particle PC1 and the small particle SP1. For example, in one or more embodiments, the first positive electrode active material AM1 may further include a transition metal coating part that is positioned on surfaces of the primary particles PRP1 within the large particle PC1 or that is coated along interfaces between the primary particles PRP1. As each of the large particle PC1 and the small particle SP1 may include the transition metal coating part, structural collapse caused by repetition of charge and discharge may be effectively suppressed or reduced, and thus inducing an improvement in lifetime characteristics at room temperature and high temperature. For example, the transition metal coating part may include one or more selected from among nickel, cobalt, and aluminium, but embodiments of the present disclosure are not limited to the examples above.

Different from the second positive electrode active material AM2, the first positive electrode active material AM1 may have a bare form without a carbon coating on a surface thereof. For example, each of the large particle PC1 and the small particle SP1 may have a bare form without a carbon coating on a surface thereof.

The bare form of the first positive electrode active material AM1 may be defined by a difference between the first positive electrode active material AM1 and the second positive electrode active material AM2 which will be discussed later in this specification. In one or more embodiments, the bare form of the first positive electrode active material AM1 may have substantially the same material or composition as that of the second positive electrode active material AM2. In one or more embodiments, the bare form of the first positive electrode active material AM1 may have substantially the same average particle diameter as that of the second positive electrode active material AM2.

The bare form of the first positive electrode active material AM1 may be a shape or a state where no additional carbon coating is applied to a surface thereof, and may indicate that a particle surface is exposed without a carbon coating layer thereon. In other words, the 'bare form' of the first positive electrode active material AM1, including particles thereof, is/are substantially devoid of the carbon coating layer. This may be differentiated from the second positive electrode active material AM2, which includes a carbon coating layer on a particle surface (i.e., on a surface of particle or 'core'), and this difference may affect surface characteristics and conductivity of active materials. The "bare form" of the first positive electrode active material AM1 may also refer to a state where the carbon coating layer is not substantially attached to a particle surface or only an extremely low concentration of carbon is present on a particle surface compared to the second positive electrode active material AM2. Except for the carbon coating layer, physical and chemical properties of the first positive electrode active material AM1 may be substantially the same as those of the second positive electrode active material AM2.

A concentration of carbon present on a surface of the first positive electrode active material AM1 is less than a concentration of carbon present on a surface of the second positive electrode active material AM2. The carbon concentration on the surface may be measured using one or more suitable analysis methods.

For example, X-ray photoelectron spectroscopy (XPS) may be employed to measure the concentration of carbon present on the surfaces of the first and second positive electrode active materials AM1 and AM2. It may be possible to compare relative concentrations of carbon elements on the surfaces of the first and second positive electrode active materials AM1 and AM2. In one or more embodiments, XPS analysis may confirm that a carbon signal is reduced or nearly absent on the surface of the first positive electrode active material AM1.

For example, energy dispersive X-ray photoelectron spectroscopy (EDS) may be employed to measure proportions (e.g., atomic percents) of carbon present on the surfaces of the first and second positive electrode active materials AM1 and AM2. The EDS analysis may be used to show that the proportion of carbon on the surface of the first positive electrode active material AM1 is significantly less than the proportion of carbon on the surface of the second positive electrode active material AM2.

For example, Raman spectroscopy may be employed to determine whether or not the carbon coating layer is present on the surface of the first positive electrode active material AM1. A peak peculiar to the carbon coating layer may not appear, or only weakly appear, in the Raman spectrum in the case of the first positive electrode active material AM1, whereas the second positive electrode active material AM2 may show a strong peak due to the presence of the carbon coating layer.

### Second Positive Electrode Active Material

Referring again to FIG. 7, the second positive electrode active material AM2 may include at least one selected from among a large particle PC2 and a small particle SP2. For example, in one or more embodiments, the second positive electrode active material AM2 may include the large particle PC2. in one or more embodiments, the second positive electrode active material AM2 may include the small particle SP2. in one or more embodiments, the second positive electrode active material AM2 may include the large particle PC2 and the small particle SP2.

An average particle diameter D50_{PC2} of the large particle PC2 may be greater than an average particle diameter D50_{SP2} of the small particle SP2. For example, in one or more embodiments, the average particle diameter D50_{PC2} of the large particle PC2 may be in a range of about 6.0 µm to about 20.0 µm, about 10.0 µm to about 20.0 µm, or about 10.0 µm to about 15.0 µm. For example, in one or more embodiments, the average particle diameter D50_{SP2} of the small particle SP2 may be in a range of about 1.0 µm to about 5.0 µm, about 2.0 µm to about 5.0 µm, or about 3.0 µm to about 5.0 µm. For example, an average particle diameter D50 may be obtained by randomly selecting 30 or more of each of the large particle PC2 and the small particle SP2 from an electron microscope image of the second positive electrode active material AM2 to measure a particle diameter, and taking a particle diameter of particles having an accumulative volume of 50 vol% in the particle size distribution as the average particle diameter. For another example, an average particle diameter D50 may be obtained by using a particle size analyzer to measure particle diameters, and taking a particle diameter of particles having an accumulative volume of 50 vol% in the particle size distribution as the average particle diameter.

The average particle diameter D50_{PC2} of the large particle PC2 may be greater than the average particle diameter D50_{PC1} of the large particle PC1. The average particle diameter D50_{SP2} of the small particle SP2 may be greater than the average particle diameter D50_{SP1} of the small particle SP1.

Each of the large particle PC2 and the small particle SP2 may have a granular shape or a spherical shape.

The second positive electrode active material AM2 according to one or more embodiments of the present disclosure may have a bimodal form that includes the large particle PC2 and the small particle SP2 whose average particle diameters are different from each other. The small particle SP2 may fill an interstice between the large particles PC2 to improve an integration density of the positive electrode active material layer AML1. For example, the positive electrode active material layer AML1 according to one or more embodiments of the present disclosure may have relatively high capacity and energy density per unit volume.

In one or more embodiments, a weight ratio of the large particle PC2 to the small particle SP2 may be in a range of about 95:5 to about 50:50. For example, in one or more embodiments, the weight ratio of the large particle PC2 to the small particle SP2 may be in a range of about 90:10 to about 60:40, about 90:10 to about 70:30, or about 80:20 to about 70:30. In one or more embodiments, the weight ratio of the large particle PC2 to the small particle SP2 may be in a range of about 5:95 to about 50:50. For example, in one or more embodiments, in the second positive electrode active material AM2, a weight of the large particle PC2 may be greater than that of the small particle SP2.

In one or more embodiments, the second positive electrode active material AM2 may include only the large particle PC2. For example, the small particle SP2 may not be provided.

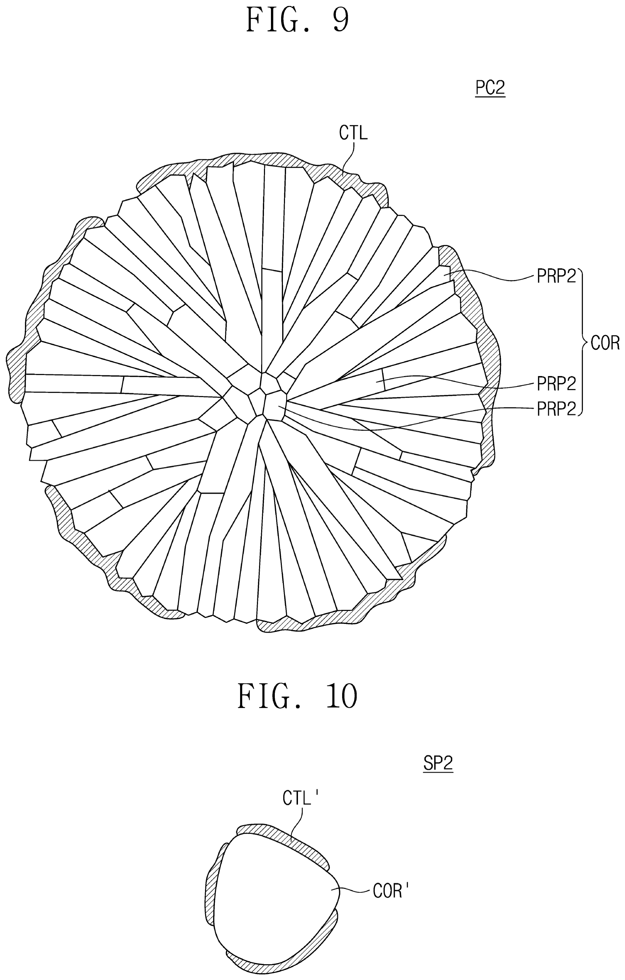

FIG. 9 illustrates a simplified cross-sectional view showing the large particle PC2 according to one or more embodiments of the present disclosure. Referring to FIG. 9, the large particle PC2 according to one or more embodiments of the present disclosure may be in a polycrystalline form, and may include a secondary particle in which at least two primary particles PRP2 are aggregated (e.g., agglomerated). The large particle PC2 may have a spherical shape or an oval shape.

The large particle PC2 may include a core COR and a carbon coating layer CTL. The core COR of the large particle PC2 may be in a polycrystalline form, and may include a secondary particle in which at least two primary particles PRP2 are aggregated (e.g., agglomerated).

FIG. 10 illustrates a simplified cross-sectional view showing the small particle SP2 according to one or more embodiments of the present disclosure. Referring to FIG. 10, the small particle SP2 according to one or more embodiments of the present disclosure may be in the form of a single particle. Here, the single particle may refer to that one single particle is present alone without a grain boundary therein. The single particle may refer to one particle, a monolithic structure, a single unitary structure, or a non-aggregated (e.g., non-agglomerated) particle in which particles are not aggregated (e.g., agglomerated) together with one another but present as an independent phase in terms of morphology, and may be expressed as a single crystal particle. As the second positive electrode active material AM2 may include the small particle SP2, it may achieve high capacity, high energy density, and improved lifetime characteristics.

The small particle SP2 may include a core COR' and a carbon coating layer CTL'.

Referring to FIG. 9 and FIG. 10, the core COR of the large particle PC2 and the core COR' of the small particle SP2 may each include a lithium-nickel-based composite oxide. The lithium-nickel-based composite oxide may include lithium (Li) and a transition metal. The transition metal may include nickel (Ni). There may be no limitation on an amount of nickel (Ni) included in the lithium-nickel-based composite oxide.

The lithium-nickel-based composite oxide may contain a high amount of nickel (Ni). For example, in one or more embodiments, the lithium-nickel-based composite oxide may have a nickel amount of equal to or greater than about 60 mol%, about 80 mol%, about 90 mol%, or about 91 mol% and equal to or less than 100 mol%, about 99.9 mol%, or about 99 mol% of metals excluding lithium in the lithium-nickel-based composite oxide. For example, in one or more embodiments, the lithium-nickel-based composite oxide may have a nickel amount of equal to or greater than about 60 mol%, about 80 mol%, about 90 mol%, or about 91 mol% and equal to or less than 100 mol%, about 99.9 mol%, or about 99 mol% relative to the total moles of transition metals in the lithium-nickel-based composite oxide. When the nickel amount falls within the ranges above, the second positive electrode active material AM2 may achieve high capacity and high performance.

For example, in one or more embodiments, the lithium-nickel-based composite oxide may be represented by Chemical Formula 1.

**Chemical Formula 1** Liₐ₁Niₓ₁M¹_{y1}M²_{z1}O_{2-b1}X_{b1}

In Chemical Formula 1, the subscripts a1, x1, y1, z1, and b1 may satisfy the relationship of 0.9≤a1≤1.8, 0.8≤x1≤1, 0≤y1≤0.2, 0≤z1≤0.2, 0.9≤x1+y1+z1≤1.1, and 0≤b1≤0.1; M¹ and M² may each independently be at least one element selected from among Al, B, Ba, Ca, Ce, Co, Cr, Cu, Fe, Mg, Mn, Mo, Nb, Si, Sr, Ti, V, W, Y and Zr; and X may be at least one element selected from among F, P, and S.

For example, in one or more embodiments, in Chemical Formula 1, the subscripts x1, y1, and z1 may satisfy the relationship of 0.85≤x1≤1, 0≤y1≤0.15, 0≤z1≤0.15 or 0.9≤x1≤1, 0≤y1≤0.1, and 0≤z1≤0.1.

In one or more embodiments, the subscripts x1, y1, and z1 may satisfy the relationship of x1+y1+z1=1.

For example, in one or more embodiments, the lithium-nickel-based composite oxide may be represented by Chemical Formula 2. A compound represented by Chemical Formula 2 may be a lithium-nickel-cobalt-based composite oxide.

**Chemical Formula 2** Liₐ₂Niₓ₂Co_{y2}M³_{z2}O_{2-b2}X_{b2}

In Chemical Formula 2, the subscripts a2, x2, y2, z2, and b2 may satisfy the relationship of 0.9≤a2≤1.8, 0.8≤x2<1, 0<y2≤0.2, 0≤z2≤0.2, 0.9≤x2+y2+z2≤1.1, and 0≤b2≤0.1; M³ may be at least one element selected from among Al, B, Ba, Ca, Ce, Cr, Fe, Mg, Mn, Mo, Nb, Si, Sr, Ti, V, W, Y and Zr; and X may be at least one element selected from among F, P, and S.

For example, in one or more embodiments, in Chemical Formula 2, the subscripts x2, y2, and z2 may satisfy the relationship of 0.85≤x2≤0.99, 0.01≤y2≤0.15, and 0.01≤z2≤0.15, or 0.9≤x2≤0.99, 0.01≤y2≤0.1, and 0.01<z2<0.1.

In one or more embodiments, the subscripts x2, y2, and z2 may satisfy the relationship of x2+y2+z2=1.

For example, in one or more embodiments, the lithium-nickel-based composite oxide may be represented by Chemical Formula 3. A compound represented by Chemical Formula 3 may be a lithium-nickel-cobalt-aluminium oxide or a lithium-nickel-cobalt-manganese oxide.

**Chemical Formula 3** Liₐ₃Niₓ₃Co_{y3}M⁴_{z3}M⁵_{w3}O_{2-b3}X_{b3}

In Chemical Formula 3, the subscripts a3, x3, y3, z3, w3, and b3 may satisfy the relationship of 0.9≤a3≤1.8, 0.8≤x3≤0.98, 0.01≤y3≤0.19, 0.01≤z3≤0.19, 0≤w3≤0.19, 0.9≤x3+y3+z3+w3≤1.1, and 0≤b3≤0.1; M⁴ may be at least one element selected from among Al and Mn; M⁵ may be at least one element selected from among B, Ba, Ca, Ce, Cr, Fe, Mg, Mo, Nb, Si, Sr, Ti, V, W, Y and Zr; and X may be at least one selected from among F, P, and S.

For example, in one or more embodiments, in Chemical Formula 3, the subscripts x3, y3, z3, and w3 may satisfy the relationship of 0.85≤x3≤0.98, 0.01≤y3≤0.14, 0.01≤z3≤0.14, and 0≤w3≤0.14, or 0.9≤x3≤0.98, 0.01≤y3≤0.09, 0.01≤z3≤0.09, and 0≤w3≤0.09.

In one or more embodiments, the subscripts x3, y3, z3, and w3 may satisfy the relationship of x3+y3+z3+w3=1.

The carbon coating layer CTL may be positioned on the core COR of the large particle PC2. The carbon coating layer CTL' may be positioned on the core COR' of the small particle SP2. For example, the carbon coating layers CTL and CTL' may be identified through compositional analysis of the second positive electrode active material AM2. As the second positive electrode active material AM2 includes the carbon coating layers CTL and CTL', the lithium-nickel-based composite oxide of the core COR and core COR' may be in direct contact with a carbon-based material included in the carbon coating layer CTL and CTL', and the positive electrode active material layer AML1 may improve in conductivity. In addition, there may be a reduction in amount of the conductive material CDM in an electrode plate including the second positive electrode active material AM2.

The carbon coating layer CTL may be positioned on a portion of a surface of the core COR included in the large particle PC2. The carbon coating layer CTL' may be positioned on a portion of a surface of the core COR' included in the small particle SP2. For example, in one or more embodiments, the carbon coating layers CTL and CTL' may be present in an island form on the core COR of the large particle PC2 and the core COR' of the small particle SP2, respectively. The carbon coating layers CTL and CTL' may partially expose the surface of the core COR of the large particle PC2 and the surface of the core COR' of the small particle SP2, respectively. Therefore, the second positive electrode active material AM2 may secure pathways of migration of lithium ions or electrons. In other words, the carbon coating layer CTL may be present in an island form on the core COR of the large particle PC2, and the carbon coating layer CTL' may be present in an island form on the core COR' of the small particle SP2. The carbon coating layer CTL may partially expose the surface of the core COR of the large particle PC2, and the carbon coating layer CTL' may partially expose the surface of the core COR' of the small particle SP2. Therefore, the second positive electrode active material AM2 may secure pathways of migration of lithium ions or electrons

The carbon coating layers CTL and CTL' may each include graphene. There may be no limitation on a type (kind) of graphene. For example, in one or more embodiments, the graphene may include reduced graphene oxide.

For example, a lateral size of the graphene may be in a range of about 0.1 µm to about 1,000 µm. The lateral size of the graphene may be interpreted as a maximum distance that connects any two ends of a graphene sheet.

The graphene included in the carbon coating layer CTL and CTL' may have conductivity greater than that of the carbon-based material included in the conductive material CDM. As the second positive electrode active material AM2 includes the graphene, the positive electrode active material layer AML1 may further improve in conductivity.

The carbon coating layers CTL and CTL' in the second positive electrode active material AM2 may be present in an amount of about 0.01 wt% to about 1 wt% relative to a total weight of 100 wt% of the second positive electrode active material AM2. For example, in one or more embodiments, the amount of the carbon coating layers CTL and CTL' in the second positive electrode active material AM2 may be in a range of about 0.05 wt% to about 0.5 wt% or from about 0.1 wt% to about 0.3 wt% relative to the total weight of 100 wt% of the second positive electrode active material AM2. When the amount of the carbon coating layers CTL and CTL' falls within the ranges above, the second positive electrode active material AM2 may have an excellent or suitable conductivity. In addition, it may reduce an amount of the conductive material CDM in an electrode plate and secure an additional space in an electrode plate having the same mixture density. Therefore, it may prevent or reduce the positive electrode active materials AM1 and AM2 from being fractured when an electrode plate is pressed and provide a rechargeable lithium battery having an excellent or suitable high-temperature lifetime.

A thickness of each of the carbon coating layers CTL and CTL' may be in a range of about 1 nanometer (nm) to about 10 nm. For example, in one or more embodiments, the thickness of each of the carbon coating layers CTL and CTL' may be in a range of about 1 nm to about 5 nm or from about 2 nm to about 3 nm. When the thicknesses of the carbon coating layers CTL and CTL' fall within the ranges above, the second positive electrode active material AM2 may have an excellent or suitable conductivity. In addition, it may reduce an amount of the conductive material CDM in an electrode plate and secure an additional space in an electrode plate having the same mixture density. Therefore, it may prevent or reduce the positive electrode active materials AM1 and AM2 from being fractured when an electrode plate is pressed and provide a rechargeable lithium battery having an excellent or suitable high-temperature lifetime.

In one or more embodiments, the second positive electrode active material AM2 may further include a transition metal coating part on (e.g., positioned on) a surface of each of the large particle PC2 and the small particle SP2. The transition metal coating part may be positioned on an entirety or at least a portion of the surface of each of the large particle PC2 and the small particle SP2. The transition metal coating part may be positioned between the core COR and COR' and their respective carbon coating layer CTL and CTL'. For example, the transition metal coating part may be positioned between the core COR and the carbon coating layer CTL, and the transition metal coating part may be positioned between the core COR' and the carbon coating layer CTL'. In one or more embodiments, the second positive electrode active material AM2 may further include a transition metal coating part that is positioned on surfaces of the primary particles PRP2 within the large particle PC2 or that is coated along interfaces between the primary particles PRP2. In one or more embodiments, the transition metal coating part may include one or more selected from among nickel, cobalt, and aluminium, but embodiments of the present disclosure are not limited to the examples above. As each of the large particle PC2 and the small particle SP2 may include the transition metal coating part, structural collapse caused by repetition of charge and discharge may be effectively suppressed or reduced, and thus inducing an improvement in lifetime characteristics at room temperature and high temperature.

The positive electrode active material layer AML1 according to one or more embodiments of the present disclosure may have the following features.

The positive electrode active material layer AML1 according to the present invention includes not only the first positive electrode active material AM1 but also the second positive electrode active material AM2. As the positive electrode active material layer AML1 includes the second positive electrode active material AM2, and as the second positive electrode active material AM2 includes the carbon coating layer CTL and/or the carbon coating layer CTL', it may decrease an amount of the conductive material CDM in an electrode plate and secure an additional space in an electrode plate having the same mixture density. In addition, an electrode plate may improve in conductivity. If (e.g., when) the positive electrode active material layer AML1 includes only the first positive electrode active material AM1, a positive electrode active material (or the first positive electrode active material AM1) may suffer from fracture when an electrode plate is pressed, and a rechargeable lithium battery may decrease in high-temperature lifetime characteristics.

In the positive electrode active material layer AML1, an amount of the first positive electrode active material AM1 may be less than that of the second positive electrode active material AM2. For example, in one or more embodiments, a weight ratio of the first positive electrode active material AM1 to the second positive electrode active material AM2 may be in a range of about 49:51 to about 20:80, about 40:60 to about 20:80, or about 30:70 to about 20:80. When the weight ratio of the first positive electrode active material AM1 to the second positive electrode active material AM2 falls within the ranges above, it may prevent or reduce the positive electrode active materials AM1 and AM2 from being fractured when an electrode plate is pressed and provide a rechargeable lithium battery having an excellent or suitable high-temperature lifetime. In addition, it may also provide an electrode plate having superior conductivity and a rechargeable lithium battery exhibiting the same.

For example, a rechargeable lithium battery according to one or more embodiments of the present disclosure, e.g. comprising the aforementioned positive electrode, may achieve a capacity retention rate of equal to or greater than about 86%, or about 90%, after 100 cycles of charge and discharge at 0.33 C/1.0 C under a temperature of about 40 °C to about 60 °C.

### Manufacture of Positive Electrode

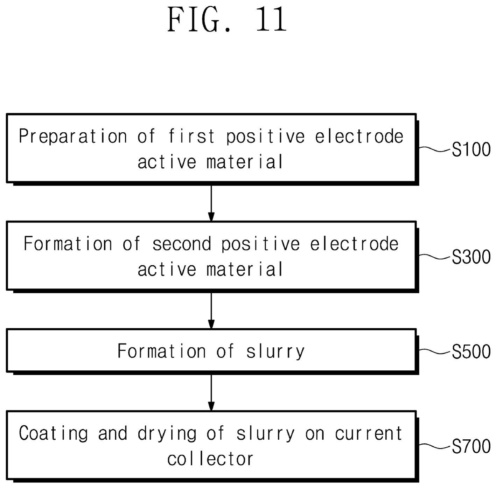

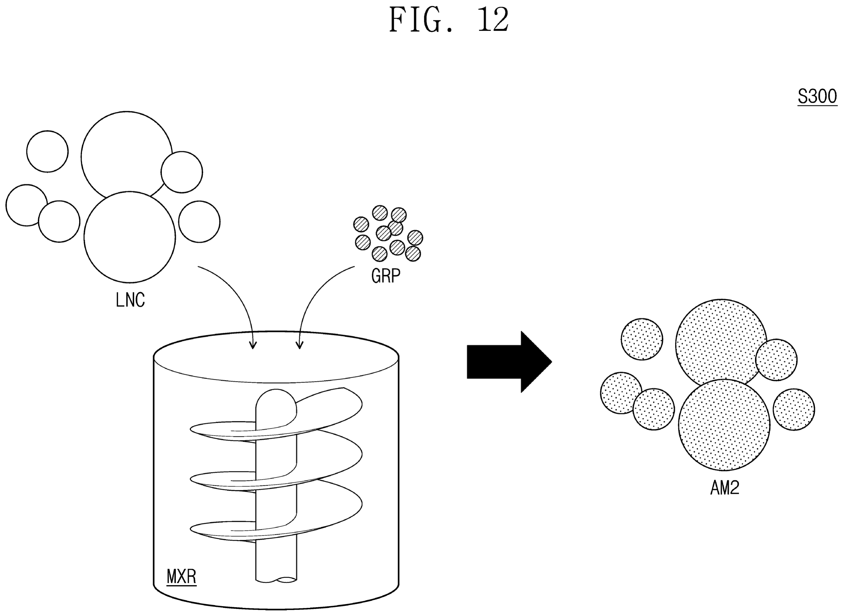

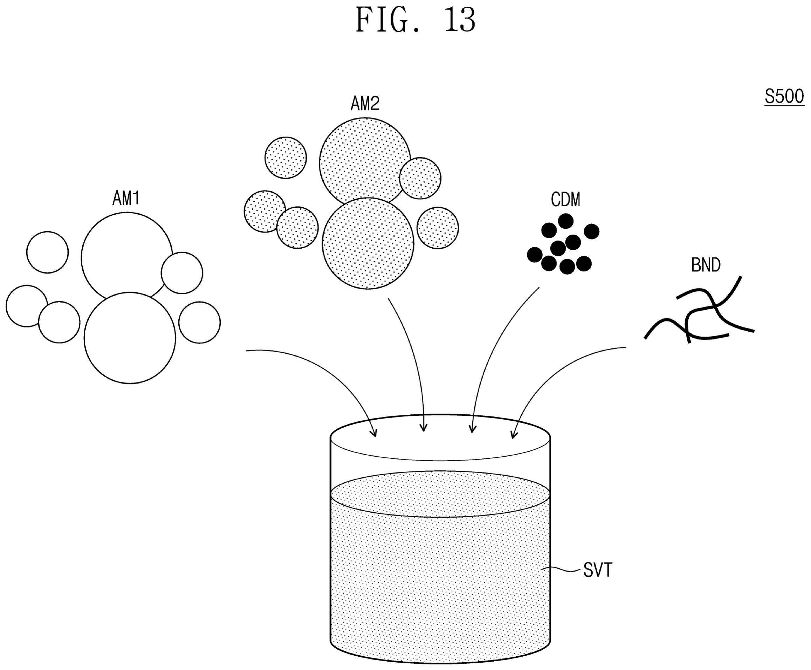

FIG. 11 illustrates a flow chart showing a method of manufacturing a positive electrode according to one or more embodiments of the present disclosure. FIGS. 12 and 13 illustrate simplified diagrams showing steps of S300 and S500 in the method.

Referring to FIG. 11, a method of manufacturing a positive electrode according to one or more embodiments of the present disclosure includes preparing a first positive electrode active material (S100), forming a second positive electrode active material (S300), forming a slurry that includes the first positive electrode active material, the second positive electrode active material, a conductive material, a binder, and a solvent (S500), and coating, drying, and pressing the slurry on a current collector (S700).

A first positive electrode active material AM1 (i.e., the first positive electrode active material) is a lithium-nickel-based composite oxide, and may include at least one selected from among a large particle PC1 and a small particle SP1 (S100). For example, the lithium-nickel-based composite oxide may be prepared by a fabrication method that includes forming nickel-based hydroxide, mixing the nickel-based hydroxide with a lithium raw material, and performing a heat treatment process. The fabrication method according to one or more embodiments may be as follows.

The nickel-based hydroxide may include a transition metal. The transition metal may include nickel (Ni), and may further include M¹ and M² of Chemical Formula 1 discussed above. For example, in one or more embodiments, the nickel-based hydroxide may include nickel (Ni) and cobalt (Co) as the transition metal. In one or more embodiments, the nickel-based hydroxide may include nickel (Ni), cobalt (Co), as the transition metal, and aluminium (Al). In one or more embodiments, the nickel-based hydroxide may include nickel (Ni), cobalt (Co), and manganese (Mn) as the transition metal.

The nickel-based hydroxide may be obtained by coprecipitation. For example, the coprecipitation method may include dissolving a raw material of transition metal in a solvent such as distilled water, and causing precipitation by continuously providing a transition metal salt solution into a reactor along with a chelating agent and/or an alkaline aqueous solution. A precipitate may be collected in the form of slurry, and then a slurry solution may be filtered and dried to obtain metal composite oxide or the nickel-based hydroxide.

The raw material of transition metal may include a salt of the transition metal discussed above. The salt of transition metal may include sulfate, nitrate, acetate, halide, or hydroxide, and there may be no particular limitation as long as a material can be dissolved in a solvent. For example, the raw material of transition metal may include a nickel salt, a cobalt salt, and an aluminium salt. For another example, the raw material of transition metal may include a nickel salt, a cobalt salt, and a manganese salt. The raw material of transition metal may be mixed by adjusting a molar ratio to allow a positive electrode active material to exhibit high-capacity characteristics.

The nickel-based hydroxide may be mixed in a specific ratio with a lithium raw material. For example, the nickel-based hydroxide and the lithium raw material may be mixed in a molar ratio of about 1:1. The lithium raw material is not particularly limited as long as being commonly used in producing a positive electrode active material. For example, the lithium raw material may include a lithium salt, such as lithium carbonate, lithium nitrate, lithium hydroxide, or lithium sulfate.

The nickel-based hydroxide and the lithium raw material may be added to and thermally treated in a furnace. A heat treatment temperature may in a range of about 700 °C to about 1,000 °C. The heat treatment may be performed under an oxidizing atmosphere such as air or oxygen. A heat treatment time may be in a range of about 10 hours to about 30 hours. For example, in one or more embodiments, before the heat treatment, a preliminary calcination may be additionally performed at about 150 °C to about 800 °C.

In one or more embodiments, after the heat treatment, a crushing process may be additionally performed. The crushing process may obtain the lithium-nickel-based composite oxide having a target average particle diameter.

Referring to FIG. 12, a second positive electrode active material AM2 (i.e., the second positive electrode active material) may be formed by mixing lithium-nickel-based composite oxide LNC and graphene GRP in a mixer MXR through a dry process (S300). In the present step (e.g., act or task), the graphene GRP may be dry coated on a surface of the lithium-nickel-based composite oxide LNC (S300).

The lithium-nickel-based composite oxide LNC may be formed through a fabrication method of one or more embodiments of the step S100.

There may be no limitation on a type (kind) of the graphene GRP. For example, the graphene GRP may include reduced graphene oxide. For example, a lateral size of the graphene GRP may be in a range of about 0.1 µm to about 1,000 µm. A conductivity of the graphene GRP may be greater than that of a carbon-based material of a conductive material CDM which will be discussed later.

The lithium-nickel-based composite oxide LNC and the graphene GRP may be mixed in a weight ratio of about 99:1 to about 99.99:0.01. For example, in one or more embodiments, the weight ratio of the lithium-nickel-based composite oxide LNC to the graphene GRP may be in a range of about 99:1 to about 99.9:0.1 or about 99.5:0.5 to about 99.9:0.1 When the weight ratio of the lithium-nickel-based composite oxide LNC to the graphene GRP falls within the ranges above, the second positive electrode active material AM2 may have an excellent or suitable conductivity.

The dry coating may refer to a coating process in which a solvent is not used. The dry coating may simplify and facilitate a coating process. In addition, the dry coating may easily adjust a thickness of each of the carbon coating layers CTL and CTL' discussed above.

For example, the dry coating may be performed at a rotation speed of about 2,000 rpm to about 3,000 rpm in a mixer MXR. For example, the dry coating may be performed at a rotation speed of about 2300 rpm to about 2700 rpm. For example, the dry coating may be performed for about 5 minutes to about 15 minutes. For example, the dry coating may be performed for about 8 minutes to about 12 minutes. When the rotation speed and the mixing time of the dry coating fall within the ranges above, the second positive electrode active material AM2 may be formed which includes the carbon coating layer CTL and CTL'.

Referring to FIG. 13, the first positive electrode active material AM1, the second positive electrode active material AM2, a conductive material CDM, and a binder BND may be dissolved or dispersed in a solvent SVT to prepare a slurry (S500). The conductive material CDM and the binder BND may each be the same as those discussed above with reference to FIGS. 1 to 7.

The solvent may be a generally used solvent in the art, and for example, may include at least one selected from among dimethyl sulfoxide (DMSO), isopropyl alcohol, N-methylpyrrolidone (NMP), acetone, water, and/or a (e.g., any suitable) combination thereof.

The first positive electrode active material AM1 and the second positive electrode active material AM2 may be mixed in a weight ratio of about 80:20 to about 20:80. For example, in one or more embodiments, the first positive electrode active material AM1 and the second positive electrode active material AM2 may be mixed in a weight ratio of about 49:51 to about 20:80, about 40:60 to about 20:80, or about 30:70 to about 20:80. When the weight ratio of the first positive electrode active material AM1 to the second positive electrode active material AM2 falls within the ranges above, it may prevent or reduce the positive electrode active materials AM1 and AM2 from being fractured when an electrode plate is pressed and provide a rechargeable lithium battery having an excellent or suitable high-temperature lifetime.

A ratio of a weight of the conductive material CDM to a total weight of the first and second positive electrode active materials AM1 and AM2 may be in a range of about 1:99.5 to about 1:97. For example, in one or more embodiments, the ratio of a weight of the conductive material CDM to a total weight of the first and second positive electrode active materials AM1 and AM2 may be equal to or greater than about 1:99.5, about 1:99, about 1:98.5, or about 1:98 and equal to or less than about 1:97. For example, in one or more embodiments, the ratio of a weight of the conductive material CDM to a total weight of the first and second positive electrode active materials AM1 and AM2 may be equal to or greater than 1:99.5 and equal to or less than about 1:97 or about 1:97.5.

As the positive electrode 10 includes the first and second positive electrode active materials AM1 and AM2, it may decrease an amount of the conductive material CDM in an electrode plate and secure an additional space in an electrode plate having the same mixture density. Therefore, it may prevent or reduce the positive electrode active materials AM1 and AM2 from being fractured when an electrode plate is pressed and provide a rechargeable lithium battery having an excellent or suitable high-temperature lifetime.

The slurry is coated on a current collector, and then dried and pressed to manufacture a positive electrode (see FIG. 6) (S700).

For example, the slurry may be coated on a current collector to have a mixture density of about 3 g/cc to about 4 g/cc and a loading level of about 20 g/cm² to about 30 g/cm².

The pressing (or rolling) may be executed by a rolling machine. The pressing may be executed to allow the positive electrode active material layer AML1 to have a target thickness. For example, the pressing may be executed to allow the positive electrode active material layer AML1 to have a thickness in a range of about 20 µm to about 70 µm, about 20 µm to about 60 µm, about 20 µm to about 50 µm, about 20 µm to about 40 µm, or about 20 µm to about 30 µm.

The present disclosure will be discussed in more detail through the following embodiments. These embodiments, however, are provided to illustrate the present disclosure, and the scope of the present disclosure is not limited to these embodiments.

### Preparation Example 1: First Positive Electrode Active Material

Lithium hydroxide (LiOH) and nickel-based hydroxide (Ni_{0.922}Co_{0.067}Al_{0.011}(OH)₂) were mixed in a molar ratio of 1.03:1, and then thermally treated at about 750 °C for 15 hours to form lithium-nickel-based composite oxide. The formed lithium-nickel-based composite oxide was crushed with a jet mill to obtain lithium-nickel-based composite oxide (LiNi_{0.922}Co_{0.067}Al_{0.011}O₂) as a large particle PC1. The lithium-nickel-based composite oxide, or the large particle PC1, was a secondary particle formed of aggregated (e.g., agglomerated) primary particles, and an average particle diameter was about 12 µm.

Also prepared was lithium-nickel-based composite oxide (LiNi_{0.922}Co_{0.067}Al_{0.011}O₂) as a small particle SP1 with an average particle diameter of about 4 µm.

The large particle PC1, the small particle SP1, cobalt sulfate (CoSO₄·7H₂O), and distilled water were mixed in a mixer. A weight ratio of the large particle PC1 and the small particle SP1 was 70:30. The mixture was filtered and dried, and then lithium hydroxide (LiOH) was mixed with the mixture. Afterwards, a heat treatment was performed at about 710 °C for 15 hours under an oxygen atmosphere to prepare a first positive electrode active material AM1.

In summary, lithium hydroxide (LiOH) and nickel-based hydroxide (Ni_{0.922}Co_{0.067}Al_{0.011}(OH)₂) are mixed in a molar ratio of 1.03:1 and thermally treated at about 750 °C for 15 hours to form a lithium-nickel-based composite oxide. This composite oxide is then crushed utilizing a jet mill to obtain large particles (PC1) with an average diameter of about 12 µm. Additionally, a separate lithium-nickel-based composite oxide (SP1) with an average diameter of about 4 µm is prepared. The large particles (PC1) and small particles (SP1) are mixed with cobalt sulfate and distilled water, filtered, dried, and then mixed with lithium hydroxide. This mixture undergoes a final heat treatment at about 710 °C for 15 hours under an oxygen atmosphere to prepare the first positive electrode active material (AM1).

### Preparation Example 2: Second Positive Electrode Active Material

The first positive electrode active material AM1 according to Preparation Example 1 and graphene were added to a mixer (e.g., NOBILTA commercially available from Hosokawa Micron Corporation), and mixed at 2,500 rpm for 10 minutes to prepare a second positive electrode active material AM2 in which carbon coating layers CTL and CTL' formed on a surface of the first positive electrode active material AM1 (e.g., respectively formed on surfaces of the large particles and the small particles of the first positive active material AM1). An amount of the graphene added was about 0.2 wt% relative to the total weight of the first positive electrode active material AM1 and the graphene. An amount of the carbon coating layers CTL and CTL' in the second positive electrode active material AM2 was about 0.1 wt% to about 0.15 wt% relative to the total weight of the second positive electrode active material AM2.

In summary, the first positive electrode active material (AM1) and graphene are mixed at 2,500 rpm for 10 minutes to form the second positive electrode active material (AM2), which has carbon coating layers on the surface of the AM1 particles. About 0.2 wt% of graphene is added relative to the total weight of AM1 and graphene. The carbon coating layers constitute about 0.1 wt% to 0.15 wt% of the total weight of AM2.

### Example 1

97.7 wt% of a positive electrode active material (first and second positive electrode active materials AM1 and AM2), 1 wt% of a conductive material (carbon nano-tube), and 1.3 wt% of a binder (polyvinylidenefluoride) were mixed in an N-methylpyrrolidone solvent to prepare a slurry. A weight of the positive electrode active material (first and second positive electrode active materials AM1 and AM2) was 20 g. A weight ratio of the conductive material to the positive electrode active material (first and second positive electrode active materials AM1 and AM2) was 1:97.7. A weight ratio of the first positive electrode active material AM1 to the second positive electrode active material AM2 was 25:75.

The slurry was coated on an aluminium current collector, and dried and pressed to manufacture a positive electrode. The slurry was coated on the current collector to have a mixture density of about 3.7 g/cc to about 3.9 g/cc and a loading level of about 20 g/cm² to about 27 g/cm². The pressing was executed by using a rolling machine to allow a positive electrode active material layer AML1 to have a thickness of about 25 µm.

In summary, the positive electrode active material is prepared by mixing 97.7 wt% of a combination of the first and second positive electrode active materials (AM1 and AM2), 1 wt% of a conductive material (carbon nanotube), and 1.3 wt% of a binder (polyvinylidene fluoride) in an N-methylpyrrolidone solvent to form a slurry. The weight ratio of AM1 to AM2 is 25:75. The slurry is coated on an aluminium current collector, dried, and pressed to achieve a mixture density of about 3.7 g/cc to 3.9 g/cc and a loading level of about 20 g/cm² to 27 g/cm². The positive electrode active material layer has a thickness of about 25 µm.

### Example 2

A positive electrode was manufactured in substantially the same method as in Example 1, except that the weight ratio of the first positive electrode active material AM1 to the second positive electrode active material AM2 was 35:65.

### Example 3

A positive electrode was manufactured in substantially the same method as in Example 1, except that the weight ratio of the first positive electrode active material AM1 to the second positive electrode active material AM2 was 45:55.

### Comparative Example 1

A positive electrode was manufactured in substantially the same method as in Example 1, except that the second positive electrode active material AM2 was not included.

### Comparative Example 2

A positive electrode was manufactured in substantially the same method as in Example 1, except that the first positive electrode active material AM1 was not included.

### Comparative Example 3

A positive electrode was manufactured in substantially the same method as in Example 1, except that 97.55 wt% of the first positive electrode active material AM1, 0.15 wt% of graphene, 1 wt% of the conductive material (carbon nano-tube), and 1.3 wt% of the binder (polyvinylidenefluoride) were mixed in the N-methylpyrrolidone solvent to prepare a slurry.

### Fabrication of Rechargeable Lithium Battery

One of the above positive electrodes and a lithium metal counter-electrode were used, and a polyethylene-polypropylene multi-layered separator was interposed the positive electrode and the counter electrode. As an electrolyte, a solution was used in which 1.0 M of LiPF₆ lithium salt was added to a solvent containing ethylene carbonate (EC) and diethyl carbonate (DEC) mixed in a volume ratio of 50:50. The electrolyte was introduced to fabricate a coin-type (kind) half-cell.

**Table 1**

| Category | Amount of first positive electrode active material (wt%) | Amount of second positive electrode active material (wt%) |
|---|---|---|
| Example 1 | 25 | 75 |
| Example 2 | 35 | 65 |
| Example 3 | 45 | 55 |
| Comparative Example 1 | 100 | 0 |
| Comparative Example 2 | 0 | 100 |
| Comparative Example 3 | 97.55 | - |

### Experimental Example 1: Cross-Sectional Analysis of Positive Electrode

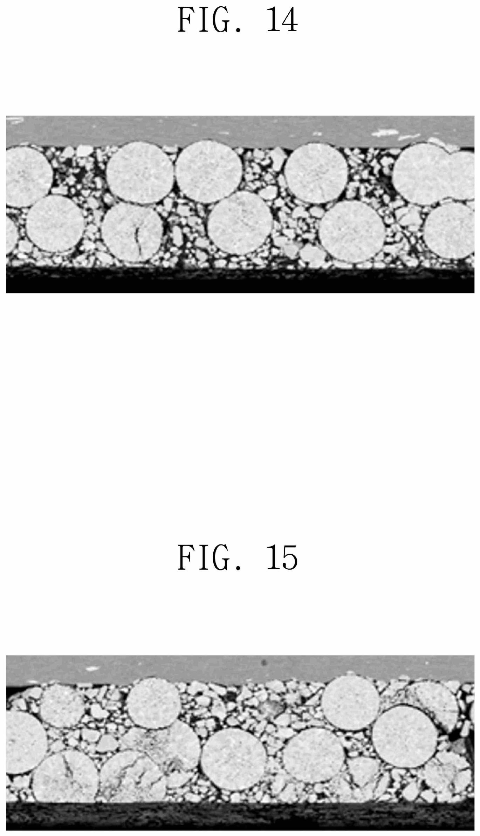

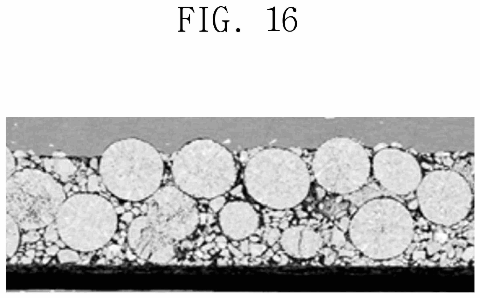

FIGS. 14 to 16 illustrate scanning electron microscope (SEM) images showing cross-sections of positive electrodes in Example 1, Comparative Example 1, and Comparative Example 2, respectively.

Referring to FIGS. 14 to 16, compared to cross-sections of the positive electrodes according to Comparative Examples 1 and 2, a cross-section of the positive electrode according to Example 1 shows, by simple visual inspection, relatively fewer broken positive electrode active materials AM1 and AM2. Thus, it is ascertained that the positive electrode according to Example 1 is capable of minimizing or reducing fracture of the positive electrode active materials AM1 and AM2 when an electrode plate was pressed.

### Experimental Example 2: Performance of Rechargeable Lithium Battery

High-temperature lifetimes of the rechargeable lithium batteries including the positive electrodes according to Examples 1 to 3 and Comparative Examples 1 to 3 were evaluated.

Each of the coin cells according to the Examples and Comparative Examples was initially charged to 4.4 V under the condition of a constant current (0.33 C), rested for 10 minutes, and then discharged to 3.0 V under the condition of a constant current (1.0 C). Afterwards, the coin cell underwent 30, 60, 90, and 100 charge-discharge cycles with 0.33 C/1.0 C at 45 °C. A capacity retention rate was calculated as a ratio of the discharge capacity at each evaluation point (30, 60, 90, and 100 cycles) to the initial discharge capacity.

The results are listed in Table 2.

**Table 2**

| Category | Capacity retention rate (30 cyc, %) | Capacity retention rate (60 cyc, %) | Capacity retention rate (90 cyc, %) | Capacity retention rate (100 cyc, %) |
|---|---|---|---|---|
| Example 1 | 96.6 | 94.4 | 92.1 | 90.3 |
| Example 2 | 96.6 | 94.0 | 91.3 | 89.5 |
| Example 3 | 96.5 | 93.7 | 90.4 | 88.5 |
| Comparative Example 1 | 95.0 | 89.7 | 84.8 | 83.5 |
| Comparative Example 2 | 96.1 | 90.5 | 85.8 | 84.4 |
| Comparative Example 3 | 95.2 | 89.9 | 85.0 | 83.6 |

Referring to Table 2, it is observed that the rechargeable lithium batteries including the positive electrodes according to Examples 1 to 3 have excellent or suitable high-temperature lifetimes.

A positive electrode according to one or more embodiments of the present disclosure may prevent or reduce a positive electrode active material from being fractured when an electrode plate is pressed.

A rechargeable lithium battery according to one or more embodiments of the present disclosure may have an excellent or suitable high-temperature lifetime by employing the positive electrode of one or more embodiments of present disclosure.

A method of manufacturing a positive electrode according to one or more embodiments of the present disclosure may manufacture a positive electrode having the features discussed above.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the present disclosure have been discussed with reference to accompanying drawings, it will be understood that one or more suitable changes in form and details may be made therein without departing from the scope of the present disclosure. It therefore will be understood that one or more embodiments described above are just illustrative but not limitative in all aspects. Accordingly, the technical scope of the disclosure is not intended to be limited to the contents set forth in the detailed description of the disclosure, but is intended to be defined by the appended claims and equivalents thereof.

Embodiments are set out in the following clauses:
Clause 1. A method of manufacturing a positive electrode, the method, comprising: (1) preparing a first positive electrode active material that comprises lithium-nickel-based composite oxide; (2) performing a dry coating on the lithium-nickel-based composite oxide with graphene to form a second positive electrode active material; (3) forming a slurry that comprises the first positive electrode active material, the second positive electrode active material, a conductive material, a binder, and a solvent; and (4) coating, drying, and pressing the slurry on a current collector.
Clause 2. The method of Clause 1, wherein the dry coating is performed at a rotation speed of about 2,000 rpm to about 3,000 rpm.
Clause 3. The method of Clause 1 or Clause 2, wherein the dry coating is performed for about 5 minutes to about 15 minutes.
Clause 4. The method of any preceding Clause, wherein the dry coating comprises mixing the lithium-nickel-based composite oxide and the graphene.
Clause 5. The method of any preceding Clause, wherein, in forming the second positive electrode active material, a weight ratio of the lithium-nickel-based composite oxide to the graphene is in a range of about 99:1 to about 99.99:0.01.
Clause 6. The method of any preceding Clause, wherein, in forming the slurry, a weight ratio of the first positive electrode active material to the second positive electrode active material is in a range of about 49:51 to about 20:80.
Clause 7. The method of any preceding Clause, wherein, in forming the slurry, a ratio of a weight of the conductive material to a total weight of the first and second positive electrode active materials is in a range of about 1:99.5 to about 1:97.

## Claims

1. A positive electrode, comprising:
a current collector; and
a positive electrode active material layer on the current collector,
wherein the positive electrode active material layer comprises:
a first positive electrode active material that comprises a lithium-nickel-based composite oxide, the first positive electrode active material having a bare form without a carbon coating on a surface thereof;
a second positive electrode active material that comprises a lithium-nickel-based composite oxide, the second positive electrode active material comprising a core and a carbon coating layer on the core;
a conductive material that comprises a carbon-based material; and
a binder.

2. The positive electrode as claimed in claim 1, wherein the first positive electrode active material comprises at least one selected from among a large particle and a small particle.

3. The positive electrode as claimed in claim 1 or claim 2, wherein the second positive electrode active material comprises at least one selected from among a large particle and a small particle.

4. The positive electrode as claimed in any preceding claim, wherein
the core comprises the lithium-nickel-based composite oxide, and
the carbon coating layer comprises graphene.

5. The positive electrode as claimed in any preceding claim, wherein the carbon coating layer is on a portion of a surface of the core.

6. The positive electrode as claimed in any preceding claim, wherein the carbon coating layer exposes a portion of a surface of the core.

7. The positive electrode as claimed in any preceding claim, wherein a total amount of the first positive electrode active material and the second positive electrode active material is in a range of about 97 wt% to about 99.5 wt% based on a total weight of 100 wt% of the positive electrode active material layer.

8. The positive electrode as claimed in any preceding claim, wherein a weight ratio of the first positive electrode active material to the second positive electrode active material is in a range of about 49:51 to about 20:80.

9. The positive electrode as claimed in any preceding claim, wherein an amount of the conductive material is in a range of about 0.5 wt% to about 2 wt% based on a total weight of 100 wt% of the positive electrode active material layer.

10. The positive electrode as claimed in any preceding claim, wherein a ratio of a weight of the conductive material to a total weight of the first positive electrode active material and the second positive electrode active material is in a range of about 1:99.5 to about 1:97.

11. The positive electrode as claimed in any preceding claim, wherein the carbon-based material comprises at least one selected from among natural graphite, artificial graphite, carbon black, acetylene black, Ketjen black, carbon fiber, carbon nano-fiber, and carbon nano-tube.

12. A rechargeable lithium battery comprising the positive electrode as claimed in any one of claims 1 to 11.

13. The rechargeable lithium battery as claimed in claim 12, wherein the rechargeable lithium battery has a capacity retention rate of equal to or greater than about 86% after 100 cycles of charge and discharge at about 0.33 C/1.0 C at about 40 °C to about 60 °C.

14. A method of manufacturing a positive electrode, the method comprising:
preparing a first positive electrode active material that comprises lithium-nickel-based composite oxide;
performing a dry coating of the lithium-nickel-based composite oxide with graphene to form a second positive electrode active material;
forming a slurry that comprises the first positive electrode active material, the second positive electrode active material, a conductive material, a binder, and a solvent; and
coating, drying, and pressing the slurry on a current collector.

15. The method as claimed in claim 14, wherein the dry coating step is performed at a rotation speed of about 2,000 rpm to about 3,000 rpm.
